# EUROPÄISCHE PATENTSCHRIFT

(11) **EP 0 331 810 B1**
(45) Veröffentlichungstag und Bekanntmachung des Hinweises auf die Patenterteilung: **01.09.1993**
(21) Anmeldenummer: 88120812.8
(22) Anmeldetag: 13.12.1988
(51) Int. Cl.: A01G 9/14

(54) **Profilrahmen**
Structural frame
Cadre en profilé

(30) Priorität: 10.03.1988 DE 8803266 U
(43) Veröffentlichungstag der Anmeldung: 13.09.1989
(73) Patentinhaber: Fälschle, Friedrich, D-86759 Wechingen (DE)
(72) Erfinder: Fälschle, Friedrich, D-86759 Wechingen (DE)
(74) Vertreter: Beetz & Partner Patentanwälte

(56) Entgegenhaltungen:
- EP-A- 0 043 466
- EP-A- 0 106 920
- DE-A- 2 614 049
- FR-A- 2 117 339
- US-A- 4 153 981
- US-A- 4 472 862

## Beschreibung

Die vorliegende Neuerung betrifft Profilrahmen für folienbespannte Gewächshauskonstruktionen nach dem Oberbegriff des Patentanspruchs 1. Ein solcher Profilrahmen ist aus der EP-A-0 106 920 bekannt.

Solche Fensterkonstruktionen finden hauptsächlich Anwendung beim Bau von leicht montier- und demontierbaren Gewächshäusern. Dabei handelt es sich in der Regel um Leichtbaukonstruktionen aus Aluminium. Solche Gewächshauskonstruktionen haben gegenüber Konstruktionen, bei denen Glasscheiben verwendet werden, den Vorteil, bedeutend preisgünstiger zu sein. Ferner lassen bestimmte Kunststoffolien einen bedeutend größeren Anteil an U-V-Licht hindurchtreten, was das Pflanzenwachstum positiv beeinflußt.

Nachteilig ist jedoch die relativ ungünstige Wärmeisolierung bei der Verwendung dünner Folien, so daß entweder höhere Heizkosten als bei Glas-Gewächshäusern entstehen oder es verkürzt sich der Zeitraum pro Jahr, während dem das Gewächshaus genutzt werden kann.

Die EP-A-0 106 920 beschreibt ein Bedachungssystem für Gebäude, das eine Schlauchfolie an vier voneinander beabstandeten parallel zueinander verlaufenden Klemmkammern spannt, um so einen dichten Hohlraum zu schaffen, in dem Klima- und Druckverhältnisse beeinflußt werden können. Eine Beschädigung der Schlauchfolie erfordert die Ersetzung des gesamten Schlauchs. Auch ist ein Auswechseln der oberen bzw. unteren Folienflächen einzeln und getrennt voneinander nicht möglich. Da sich die angelegte Verspannkraft auf alle Seiten des Schlauches überträgt, ist es auch nicht möglich, unterschiedliche Folien mit unterschiedlicher Zugspannung einzupassen.

Der vorliegenden Neuerung liegt die Aufgabe zugrunde, einen Profilrahmen anzugeben, mit dem folienbespannte Gewächshauskonstruktionen erstellt werden können, die eine bessere Wärmedämmung aufweisen, und deren Bespannung einfach auszuwechseln und flexibel an die bestehenden Bedürfnisse angepaßt ist.

Diese Aufgabe wird anspruchsgemäß gelöst.

Neuerungsgemäß weisen die Profile des Profilrahmens jeweils eine zweite Klemmkammer mit einer Längserstreckung parallel zur ersten Klemmkammer zur Aufnahme einer zweiten Folie auf.

Mit den neuerungsgemäßen Profilrahmen lassen sich somit Doppelfolienrahmen z.B. für Seitenlüftungen von Gewächshausern erstellen, wobei die beiden verwendeten Folien zwischen sich einen Luftraum einschließen, der als Isolierschicht dient.

Es können ferner Folien verschiedener Eigenschaften miteinander kombiniert werden, z.B. Folien mit bestimmten Filtereigenschaften und mechanisch besonders strapazierfähige Folien oder Noppenfolien, die Luftpolster einschließen mit filternden oder extremen leichten dünnen Folien.

Schließlich können die neuerungsgemäßen Profilrahmen mit luftdurchlässigen Geweben bespannt werden, wenn dies z.B. zur Klimaregulierung erwünscht ist.

Im folgenden wird die Neuerung anhand der Beschreibung bevorzugter Ausführungsformen mit bezug auf die Zeichnung näher erläutert. Darin zeigen:
- Fig. 1: ein oberes, in einer Rahmenkonstruktion horizontal angeordnetes Profil im Querschnitt;
- Fig. 2: das untere horizontal verlaufende Profil eines Profilrahmens; und
- Fig. 3: eine Rahmenkonstruktion im Schnitt, bestehend aus den Profilen gemäß den Fig. 1 und 2 und zweier eingespannter Folien.

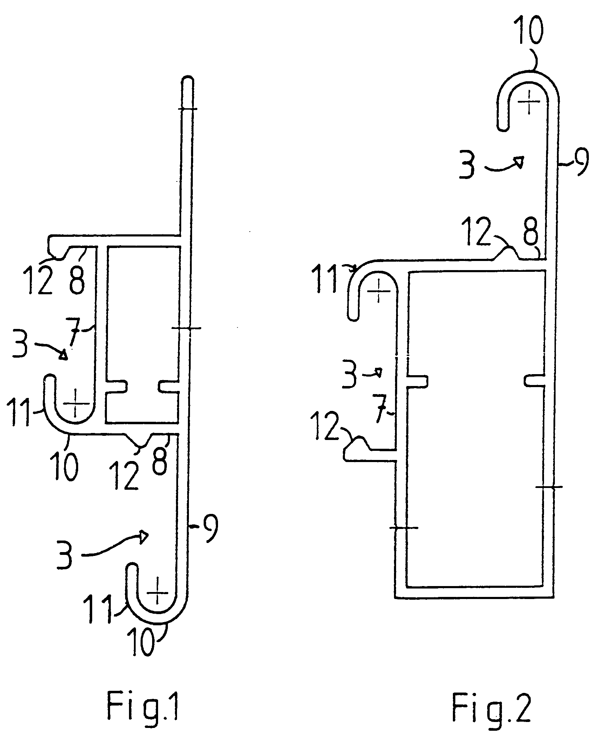

Fig. 1 zeigt im Querschnitt ein Profil, das im wesentlichen aus einem Grundkörper mit rechteckigem Querschnitt und zwei daran angegliederten Klemmkammern 3 besteht.

Eine erste Klemmkammer ist an der unteren Schmalseite des Rechteckprofils angebracht und erstreckt sich von dort ausgehend in Richtung auf das Innere eines aus solchen Profilen gebildeten Rahmens. Mit der rechten, auch nach oben verlängerten Seitenwand des Rechteckprofils fluchtet eine geschlossene Seitenwand der Klemmkammer, an deren unterem Ende sich eine halbkreisförmig nach außen gewölbte Stirnwand 10 anschließt, die wiederum an ihrem linken Rand in Fig. 1 durch ein Ansatzstück 11 fortgesetzt wird, das die Klemmkammer auf ihrer linken Seite nur zu einem geringen Teil abschließt. In die so gebildete Öffnung wird beim Anbringen einer Folie zunächst ein Randstreifen der Folie eingelegt und anschließend eine Klemmleiste, mit der der Randbereich der Folie gegen die Innenwand der Stirnwand 10 gedrückt wird. Die Klemmleiste 4 wird über eine gegenüber dem Ende des Ansatzstücks 11 am Rand der anderen Stirnwand vorgesehenen Rippe hinweg in die Klemmkammer eingebracht. Die Breite dieser Klemmleiste ist so gewählt, daß der Folienrand durch Quetschung zwischen einer Innenwand der Klemmkammer und der Klemmleiste 4 gehaltert wird.

An der Verlängerung der rechten Seitenwand des Rechteckprofils nach Fig. 1 nach oben kann eine Dichtlippe 14 angebracht werden, die eine dichte Verbindung mit anschließenden Teilen, wie z.B. einer Dachkonstruktion, gewährleistet.

Eine zweite Klemmkammer ist an der linken Seitenfläche des Rechteckprofils angebracht. Hier ist die Seitenwand 7 als eine Seitenwand des Rechteckprofils ausgeführt. Die obere Stirnwand 8 der Klemmkammer verlängert die obere Schmalseite des Rechteckprofils nach links und endet in einer sich nach unten verdickenden Rippe 12, die wiederum zum Einrasten einer Klemmleiste 4 dient. Die untere Stirnwand 10 ist in dieser Klemmkammer nur innen mit halbrundem Querschnitt ausgeführt, wohingegen die Außenwand der unteren Stirnwand 10 sich bündig an die Außenwand der unteren Schmalseite des Rechteckprofils anschließt. Auf der linken Seite in Fig. 1 wird die untere Stirnwand wiederum durch ein Ansatzstück 11 nach oben etwas verlängert, so daß die Klemmkammer nach links hin teilweise geöffnet bleibt. Das Einspannen einer zweiten Folie erfolgt genauso wie das der ersten Folie.

Beide Klemmkammern sind so ausgeführt, daß sie eine gewisse Eigenelastizität aufweisen, so daß eine elastische Verformung der Seitenwände das Überwinden der Rippen 12 mit den Klemmleisten 4 ermöglicht, wobei die Klemmleisten anschließend im Innenraum der Klemmkammern 3 einrasten und dort auch bei Zugbelastung der Folien 1, 6 verharren.

Der in Fig. 2 gezeigte Rahmenteil ist in einer Fensterkonstruktion unten angebracht, wo er ebenfalls horizontal verläuft. Im Aufbau unterscheidet er sich nicht wesentlich von dem in Fig. 1 gezeigten oberen Rahmenteil; lediglich die Seitenwände des Rechteckprofils sind etwas größer dimensioniert, wodurch sich auch ein größerer seitlicher Abstand zwischen den Klemmkammern ergibt. Das untere Profil kann uU auch Teil einer tragenden Konstruktion, z.B. ein Pfettenprofil, sein.

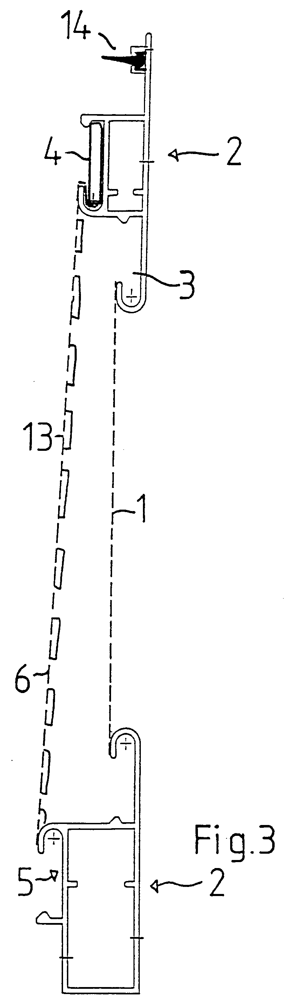

Fig. 3 zeigt ein oberes und ein unteres Profil, wie in den Fig. 1 und 2 gezeigt, im Schnitt, zwischen denen zwei Folien 1 und 6 eingespannt sind. Man erkennt, daß der Profilrahmen zusammen mit den Folien 1 und 6 ein Luftvolumen abschließt, das als vorzügliche Wärmedämmung wirkt. Zusätzlich ist es möglich, eine Noppenfolie mit eingebauten Luftpolstern 13 einzusppnnen, wie dies im Fall der Folie 6 eingezeichnet ist.

Diese Rahmenkonstruktionen können als integrierte Bestandteile der Tragkonstruktion eines Leichtbau-Gewächshauses eingesetzt werden, das leicht demontierbar ist. Eine solche Konstruktion kann je nach erforderlicher Raumkapazität schnell auf- und abgebaut werden. Die durch die Verwendung zweier Folien bewirkte gute Wärmedämmung erweitert den Einsatzbereich solcher Foliengewächshäuser erheblich. Je nach Bedarf können verschiedene Folien in die Profilrahmen eingespannt und auch schnell wieder ausgewechselt werden.

## Patentansprüche

1. Profilrahmen für folienbespannte Gewächshauskonstruktionen, bei denen eine Folie in an mindestens zwei sich gegenüberliegenden Profilen (2) angeordneten ersten Klemmkammern (3) und zweiten Klemmkammern (5) mit einer Längserstreckung parallel zu den ersten Klemmkammern (3) mit Klemmleisten (4) befestigt ist,
dadurch gekennzeichnet, daß
in den ersten Klemmkammern (3) eine von zwei unterschiedlichen, voneinander getrennten einzeln auswechselbaren Folien (1, 6) und in den zweiten Klemmkammern die zweite dieser Folien (6) befestigt sind, wobei die Befestigung ausschließlich durch die Klemmung der Folie an deren Rand für jede Folie getrennt erfolgt,
daß die Klemmkammern (3, 5) jeweils eine geschlossene Seitenwand (7, 9), zwei Stirnwände (8, 10) und eine teilweise offene Seitenwand (11) aufweisen,
daß die zum Rahmeninneren gelegene Stirnwand (10) der Klemmkammer einen mindestens im Kammerinneren halbrunden Querschnitt aufweist und daß sich auf der teilweise offenen Seite ein kurzer, parallel zur geschlossenen Seitenwand (9) verlaufender Ansatz (11) anschließt,
und dadurch, daß die Folie außen und innen an dem Ansatz (11) anliegend geführt ist, um die Haftreibung zwischen Folie und Klemmkammer zu erhöhen (Fig. 3).

2. Profilrahmen nach Anspruch 1, dadurch gekennzeichnet, daß die Klemmkammern (3, 5) an das Rahmenprofil der Gewächshauskonstruktionen anschließend angeordnet sind und jeweils mit dieser eine Seitenwand (7, 8) gemeinsam haben.

3. Profilrahmen nach Anspruch 1, dadurch gekennzeichnet, daß am zur teilweise offenen Seite (11) gelegenen Rand der vom Rahmeninneren wegweisenden Stirnwand (8) der Klemmkammer eine Rippe (12) mit im wesentlichen dreieckigem Querschnitt angeordnet ist.

4. Profilrahmen nach einem der vorstehenden Ansprüche, dadurch gekennzeichnet, daß die Klemmkammern zur Einspannung einer ersten Folie (1) sich von den Innenseiten des Rahmens aus zum Rahmeninneren erstrecken und die Klemmkammern zur Einspannung einer zweiten Folie (6) auf einer Seitenfläche des Rahmens angeordnet sind.

5. Profilrahmen nach einem der vorstehenden Ansprüche, dadurch gekennzeichnet, daß die erste Folie (1) eine Schlauchfolie aus Kunststoff und die zweite Folie (6) eine Noppenfolie mit abgeschlossenen Luftpolstern (13) ist.

6. Profilrahmen nach einem der vorstehenden Ansprüche, dadurch gekennzeichnet, daß die Profile (2) und die mittels der Klemmkammern eingespannten Folien (1, 6) einen abgeschlossenen Raum umschließen.

7. Profilrahmen nach einem der vorstehenden Ansprüche, dadurch gekennzeichnet, daß die Folien (1, 6) UV-lichtdurchlässig sind.

8. Profilrahmen nach einem der vorstehenden Ansprüche, dadurch gekennzeichnet, daß der Seitenabstand der Klemmkammern (3, 5) am oberen Rahmenprofil und am unteren Rahmenprofil eines Profilrahmens unterschiedlich gewählt ist.

9. Profilrahmen nach einem der vorstehenden Ansprüche, dadurch gekennzeichnet, daß die Rahmenkonstruktionen Bestandteil demontierbarer Gewächshäuser sind.

10. Profilrahmen nach einem der vorstehenden Ansprüche, dadurch gekennzeichnet, daß die Profile (2) aus einer Aluminium-Magnesium-Silizium-Legierung bestehen.

11. Profilrahmen nach einem der vorstehenden Ansprüche, dadurch gekennzeichnet, daß die Profile (2) Dichtlippen (14) zur Abdichtung der Spalte zwischen zwei benachbart angeordneten Profilen aufweisen.

## Claims

1. A structural frame for plastic-sheeting greenhouse constructions, plastic sheeting being secured by clamping strips (4) in first clamping chambers (3) and second clamping chambers (5) disposed in at least two facing section members (2), the second clamping chambers (5) extending lengthwise parallel to the first clamping chambers (3), characterised in that one out of two different separate individually interchangeable plastic sheets (1, 6) is secured in the first clamping chambers (3) and the second plastic sheet (6) is secured in the second clamping chambers, exclusively by clamping the edge of each sheet separately, the clamping chambers (3, 5) each have a closed side wall (7, 9), two end walls (8, 10) and a partly open side wall (11), the end wall (10) of the clamping chamber facing the interior of the frame has a semicircular cross-section, at least inside the chamber, and a short projection (11) extending parallel to the closed side wall (9) is adjacent the partly open side, and the sheets are guided externally and internally adjacent the projection (11), in order to increase the adhesive friction between the sheet and the clamping chamber (Fig. 3).

2. A structural frame according to claim 1, characterised in that the clamping chambers (3, 5) are disposed adjacent the frame section member of the greenhouse constructions and each have a side wall (7, 8) in common therewith.

3. A structural frame according to claim 1, characterised in that a rib (12) having a substantially triangular cross-section is disposed on the edge facing the partly open side (11) of the end wall (8) of the clamping chamber pointing away from the interior of the frame.

4. A structural frame according to any of the preceding claims, characterised in that the clamping chambers for clamping a first plastic sheet (1) extend from the insides of the frame towards the interior of the frame and the clamping chambers for clamping a second sheet (6) are disposed on a side surface of the frame.

5. A structural frame according to any of the preceding claims, characterised in that the first sheet (1) is a tubular plastic film and the second sheet (6) is a bubble-type sheet with enclosed air cushions (13).

6. A structural frame according to any of the preceding claims, characterised in that the section members (2) and the sheets (1, 6) clamped by the clamping chambers surround an enclosed space.

7. A structural frame according to any of the preceding claims, characterised in that the sheets (1, 6) are permeable to UV light.

8. A structural frame according to any of the preceding claims, characterised in that the lateral spacing between the clamping chambers (3, 5) at the top section member of a structural frame is different from the spacing at the bottom section member.

9. A structural frame according to any of the preceding claims, characterised in that the frame constructions are parts of dismountable greenhouses.

10. A structural frame according to any of the preceding claims, characterised in that the section members (2) are made of an aluminium-magnesium-silicon alloy.

11. A structural frame according to any of the preceding claims, characterised in that the section members (2) have sealing lips (14) for sealing the gaps between each pair of adjacent section members.

## Revendications

1. Cadre en profilés pour constructions de serres tendues de feuilles, dans lesquelles une feuille est fixée au moyen de baguettes de serrage (4) dans des premières chambres de serrage (3) et des secondes chambres de serrage (5) dont l'étendue longitudinale est parallèle aux premières chambres de serrage (3), disposées sur au moins deux profilés (2) opposés caractérisé en ce qu'une feuille parmi deux feuilles (1, 6) différentes, séparées l'une de l'autre et interchangeables individuellement est fixée dans les premières chambres de serrage (3) et la deuxième (6) de ces feuilles est fixée dans les secondes chambres de serrage, la fixation se faisant séparément pour chaque feuille exclusivement par le serrage de la feuille au niveau de son bord, en ce que les chambres de serrage (3, 5) comportent chacune une paroi latérale fermée (7, 9), deux parois frontales (8, 10) et une paroi latérale (11) partiellement ouverte, en ce que la paroi frontale (10) de la chambre de serrage qui est dirigée vers l'intérieur du cadre présente une section droite semi-circulaire au moins à l'intérieur de la chambre et en ce qu'un court rebord (11) qui s'étend parallèlement à la paroi latérale (9) fermée et situé sur le côté partiellement ouvert, et en ce que la feuille est appliquée sur l'extérieur et sur l'intérieur du rebord (11) pour augmenter le frottement par adhérence entre la feuille et la chambre de serrage (figure 3).

2. Cadre en profilés selon la revendication 1, caractérisé en ce que les chambres de serrage (3, 5) sont disposées sur le profilé de cadre des constructions de serres de manière contiguë et ont chacune en commun avec celui-ci une paroi latérale (7, 8).

3. Cadre en profilés selon la revendication 1, caractérisé en ce qu'une nervure (12) à section droite sensiblement triangulaire est disposée sur le bord, tourné vers le côté partiellement ouvert (11), de la paroi frontale (8) de la chambre de serrage qui s'écarte de l'intérieur du cadre.

4. Cadre en profilés selon l'une des revendications précédentes, caractérisé en ce que les chambres de serrage pour la fixation d'une première feuille (1) s'étendent à partir des côtés internes du cadre en direction de l'intérieur du cadre et les chambres de serrage pour la fixation d'une seconde feuille (6) sont disposées sur une surface latérale du cadre.

5. Cadre en profilés selon l'une des revendications précédentes, caractérisé en ce que la première feuille (1) est une feuille en gaine en matière plastique et la seconde feuille (6) est une feuille en nopes comportant des matelas d'air (13) fermés.

6. Cadre en profilés selon l'une des revendications précédentes, caractérisé en ce que les profilés (2) et les feuilles (1, 6) tendues à l'aide des chambres de serrage entourent un espace fermé.

7. Cadre en profilés selon l'une des revendications précédentes, caractérisé en ce que les feuilles (1, 6) sont perméables aux rayonnements UV.

8. Cadre en profilés selon l'une des revendications précédentes, caractérisé en ce que la distance latérale entre les chambres de serrage (3, 5) est choisie différente sur le profilé de cadre supérieur et sur le profilé de cadre inférieur d'un cadre en profilés.

9. Cadre en profilés selon l'une des revendications précédentes, caractérisé en ce que les constructions de cadre font partie de serres démontables.

10. Cadre en profilés selon l'une des revendications précédentes, caractérisé en ce que les profilés (2) consistent en un alliage aluminium-magnésium-silicium.

11. Cadre en profilés selon l'une des revendications précédentes, caractérisé en ce que les profilés (2) comportent des lèvres d'étanchéité (14) pour l'obturation étanche des interstices entre deux profilés voisins.
